(19) Europäisches Patentamt
European Patent Office
Office européen des brevets

(11) **EP 2 560 299 A2**

(12) **EUROPEAN PATENT APPLICATION**
published in accordance with Art. 153(4) EPC

(43) Date of publication:
**20.02.2013 Bulletin 2013/08**

(21) Application number: **11769003.2**

(22) Date of filing: **31.03.2011**

(51) Int Cl.:
*H04B 7/14* (2006.01)      *H04J 11/00* (2006.01)
*H04W 72/04* (2009.01)

(86) International application number:
**PCT/KR2011/002226**

(87) International publication number:
**WO 2011/129537 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2010 US 324278 P**

(71) Applicant: **LG Electronics Inc.**
**Seoul 150-721 (KR)**

(72) Inventors:
• **KIM, Hak Seong**
**Anyang-si, Gyeonggi-do 431-080 (KR)**
• **KIM, Byoung Hoon**
**Anyang-si, Gyeonggi-do 431-080 (KR)**

(74) Representative: **Katérle, Axel**
**Wuesthoff & Wuesthoff**
**Patent- und Rechtsanwälte**
**Schweigerstraße 2**
**81541 München (DE)**

(54) **METHOD FOR SETTING A SEARCH SPACE FOR A RELAY NODE IN A WIRELESS COMMUNICATION SYSTEM AND APPARATUS FOR SAME**

(57)     A method of receiving a control signal in a relay node from a base station in a wireless communication system comprises receiving a downlink signal from the base station; and acquiring control information for the relay node from a search space included in the downlink signal, wherein the search space is defined based on a resource allocation unit indicated by resource allocation bits included in resource allocation information received from a higher layer. Preferably, the resource allocation unit indicated by the resource allocation bits is determined in accordance with a type of the resource allocation information.

FIG. 12

**Description**

## TECHNICAL FIELD

The present invention relates to a wireless communication system, and more particularly, to a method of configuring a search space for a relay node in a wireless communication system and an apparatus thereof.

## BACKGROUND ART

A 3rd generation partnership project long term evolution (hereinafter, referred to as 'LTE') communication system which is an example of a wireless communication system to which the present invention can be applied will be described in brief.

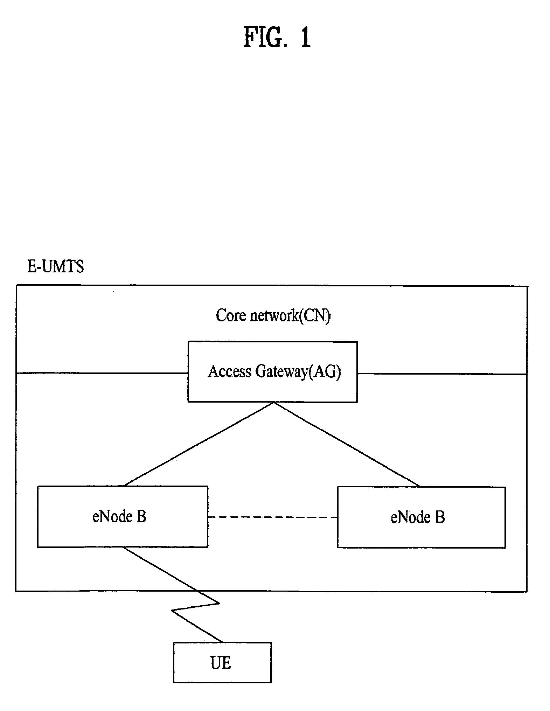

FIG. 1 is a diagram illustrating a network structure of an Evolved Universal Mobile Telecommunications System (E-UMTS) which is an example of a wireless communication system. The E-UMTS system is an evolved version of the conventional UMTS system, and its basic standardization is in progress under the 3rd Generation Partnership Project (3GPP). The E-UMTS may also be referred to as a Long Term Evolution (LTE) system. For details of the technical specifications of the UMTS and E-UMTS, refer to Release 7 and Release 8 of "3rd Generation Partnership Project; Technical Specification Group Radio Access Network".

Referring to FIG. 1, the E-UMTS includes a User Equipment (UE) 120, base stations (eNode B and eNB) 110a and 110b, and an Access Gateway (AG) which is located at an end of a network (E-UTRAN) and connected to an external network. The base stations can simultaneously transmit multiple data streams for a broadcast service, a multicast service and/or a unicast service.

One or more cells may exist for one base station. One cell is set to one of bandwidths of 1.25, 2.5, 5, 10, and 20Mhz to provide a downlink or uplink transport service to several user equipments. Different cells may be set to provide different bandwidths. Also, one base station controls data transmission and reception for a plurality of user equipments. The base station transmits downlink (DL) scheduling information of downlink data to the corresponding user equipment to indicate time and frequency domains to which data will be transmitted and information related to encoding, data size, hybrid automatic repeat and request (HARQ). Also, the base station transmits uplink (UL) scheduling information of uplink data to the corresponding user equipment to indicate time and frequency domains that can be used by the corresponding user equipment, and information related to encoding, data size, HARQ. An interface for transmitting user traffic or control traffic can be used between the base stations. A Core Network (CN) may include the AG and a network node or the like for user registration of the UE. The AG manages mobility of a UE on a Tracking Area (TA) basis, wherein one TA includes a plurality of cells.

Although the wireless communication technology developed based on WCDMA has been evolved into LTE, request and expectation of users and providers have continued to increase. Also, since another wireless access technology is being continuously developed, new evolution of the wireless communication technology is required for competitiveness in the future. In this respect, reduction of cost per bit, increase of available service, use of adaptable frequency band, simple structure, open type interface, proper power consumption of user equipment, etc. are required.

## DESCRIPTION OF THE INVENTION

## TECHNICAL PROBLEMS

Accordingly, the present invention is directed to a method of configuring a search space for a relay node in a wireless communication system and an apparatus thereof, which substantially obviate one or more problems due to limitations and disadvantages of the related art.

An object of the present invention is to provide a method of configuring a search space for a relay node in a wireless communication system and an apparatus thereof based on the aforementioned discussion.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

## TECHNICAL SOLUTIONS

To achieve these objects and other advantages and in accordance with the purpose of the invention, as embodied and broadly described herein, a method of receiving a control signal in a relay node from a base station in a wireless communication system comprises receiving a downlink signal from the base station; and acquiring control information for the relay node by performing blind decoding for the downlink signal, wherein a size of a resource allocation basic unit for allocating the control information for the relay node is defined based on a system bandwidth, wherein a size of a search space for performing the blind decoding is set based on the system bandwidth and the size of the resource allocation basic unit, and wherein a location of the search space is defined by an offset value within the resource allocation basic unit.

In another aspect of the present invention, a relay node in a wireless communication system comprises a receiving module receiving a downlink signal from a base station; and a processor acquiring control information for the relay node by performing blind decoding for the downlink signal, wherein a size of a resource allocation basic unit for allocating the control information for the relay node is defined based on a system bandwidth, wherein a size of a search space for performing the blind decoding is set based on the system bandwidth and the size of the resource allocation basic unit, and wherein a location of the search space is defined by an offset value within the resource allocation basic unit.

In this case, the search space is set as much as the predetermined number per the resource allocation basic unit, and the location of the search space is varied per a subframe in accordance with patterns defined in a unit of a specific number of radio frames. Namely, a frequency hopping scheme is preferably applied to the search space.

In still another aspect of the present invention, a method of receiving a control signal in a relay node from a base station in a wireless communication system comprises receiving a downlink signal from the base station; and acquiring control information for the relay node from a search space included in the downlink signal, wherein the search space is defined based on a resource allocation unit indicated by resource allocation bits included in resource allocation information received from a higher layer.

In further still another aspect of the present invention, a relay node in a wireless communication system comprises a receiving module receiving a downlink signal from the base station; and a processor acquiring control information for the relay node from a search space included in the downlink signal, wherein the search space is defined based on a resource allocation unit indicated by resource allocation bits included in resource allocation information received from a higher layer.

In this case, the resource allocation unit indicated by the resource allocation bits is determined in accordance with a type of the resource allocation information. Preferably, the resource allocation unit indicated by the resource allocation bits is resource block (RB) or resource block group (RBG).

## ADVANTAGEOUS EFFECTS

According to the embodiments of the present invention, a search space for a relay node can be set effectively in a wireless communication system that includes a relay node, and the relay node can effectively receive control information by using the search space.

It is to be understood that the advantages that can be obtained by the present invention are not limited to the aforementioned advantages and other advantages which are not mentioned will be apparent from the following description to the person with an ordinary skill in the art to which the present invention pertains.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram illustrating a network structure of an Evolved Universal Mobile Telecommunications System (E-UMTS) which is an example of a mobile communication system;
FIG. 2 is a diagram illustrating structures of a control plane and a user plane of a radio interface protocol between a user equipment and E-UTRAN based on the 3GPP radio access network standard;
FIG. 3 is a diagram illustrating physical channels used in a 3GPP system and a general method for transmitting a signal using the physical channels;
FIG. 4 is a diagram illustrating a structure of a radio frame used in an LTE system;
FIG. 5 is a diagram illustrating a structure of a downlink subframe used in an LTE system;
FIG. 6 is a diagram illustrating a resource unit used to configure a control channel;
FIG. 7 is a diagram illustrating an example of CCEs distributed in a system band;
FIG. 8 is a diagram illustrating a structure of an uplink subframe used in an LTE system;
FIG. 9 is a diagram illustrating a configuration of a relay backhaul link and a relay access link in a wireless communication system;
FIG. 10 is a diagram illustrating an example of resource partitioning of a relay node;

FIG. 11 is a diagram illustrating a method of setting a search space for R-PDCCH to reduce inter-cell interference in accordance with the embodiment of the present invention;

FIG. 12 and FIG. 13 are diagrams illustrating resource allocation information type 0 and resource allocation information type 1 in an LTE system; and

FIG. 14 is a diagram illustrating an example of a hopping scheme of a search space for R-PDCCH according to the embodiment of the present invention; and

FIG. 15 is a block diagram illustrating a communication apparatus according to the embodiment of the present invention.

## **BEST MODE FOR CARRYING OUT THE INVENTION**

Hereinafter, structures, operations, and other features of the present invention will be understood readily by the preferred embodiments of the present invention, examples of which are illustrated in the accompanying drawings. Embodiments described later are examples in which technical features of the present invention are applied to 3GPP system.

Although the embodiment of the present invention will be described based on the LTE system and the LTE-A system in this specification, the LTE system and the LTE-A system are only exemplary and can be applied to all communication systems corresponding to the aforementioned definition. Also, although the embodiment of the present invention will herein be described based on FDD mode, the FDD mode is only exemplary and the embodiment of the present invention can easily be applied to H-FDD mode or TDD mode.

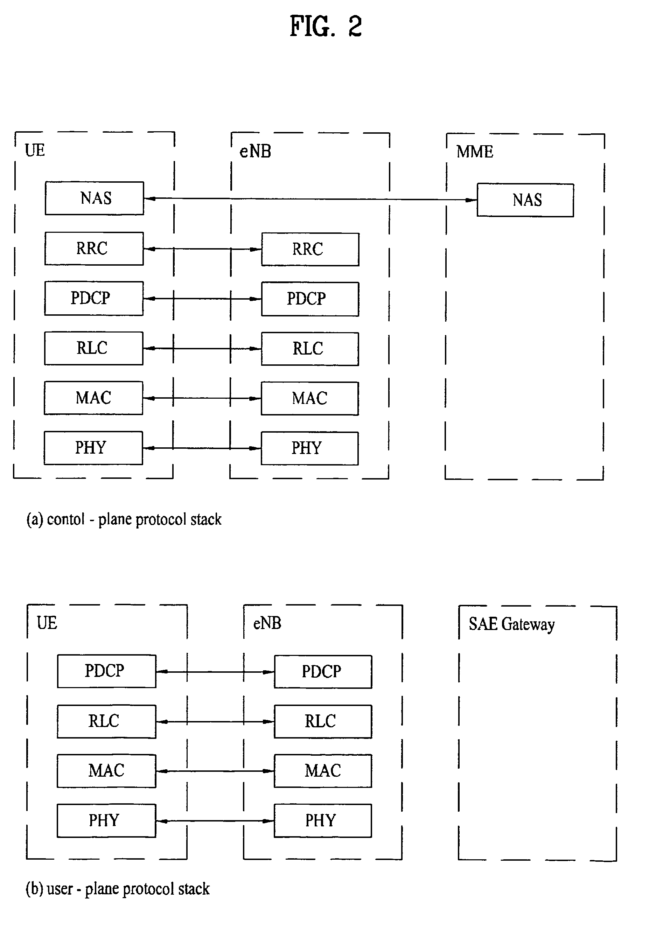

FIG. 2 is a diagram illustrating structures of a control plane and a user plane of a radio interface protocol between a user equipment and E-UTRAN based on the 3GPP radio access network standard. The control plane means a passageway where control messages are transmitted, wherein the control messages are used in the user equipment and the network to manage call. The user plane means a passageway where data generated in an application layer, for example, voice data or Internet packet data are transmitted.

A physical layer as the first layer provides an information transfer service to an upper layer using a physical channel. The physical layer (PHY) is connected to a medium access control layer above the physical layer via a transport channel. Data are transferred between the medium access control layer and the physical layer via the transport channel. Data are transferred between one physical layer of a transmitting side and the other physical layer of a receiving side via the physical channel. The physical channel uses time and frequency as radio resources. Specifically, the physical channel is modulated in accordance with an orthogonal frequency division multiple access (OFDMA) scheme in a downlink, and is modulated in accordance with a single carrier frequency division multiple access (SC-FDMA) scheme in an uplink.

A medium access control layer of the second layer provides a service to a radio link control (RLC) layer above the MAC layer via logical channels. The RLC layer of the second layer supports reliable data transfer. The RLC layer may be implemented as a functional block inside the MAC layer. In order to effectively transmit data using IP packets (e.g., IPv4 or IPv6) within a radio interface having a narrow bandwidth, a packet data convergence protocol (PDCP) layer of the second layer performs header compression to reduce the size of unnecessary control information.

A radio resource control (hereinafter, abbreviated as 'RRC') layer located on a lowest part of the third layer is defined in the control plane only. The RRC layer is associated with configuration, re-configuration and release of radio bearers (hereinafter, abbreviated as 'RBs') to be in charge of controlling the logical, transport and physical channels. In this case, the RB means a service provided by the second layer for the data transfer between the user equipment and the network. To this end, the RRC layer of the user equipment and the network exchanges RRC message with each other. If the RRC layer of the user equipment is RRC connected with the RRC layer of the network, the user equipment is in RRC connected mode. If not so, the user equipment is in RRC idle mode. A non-access stratum (NAS) layer located above the RRC layer performs functions such as session management and mobility management.

One cell constituting a base station (eNB) is established at one of bandwidths of 1.25, 2.5, 5, 10, 15, and 20Mhz and provides a downlink or uplink transmission service to several user equipments. At this time, different cells can be established to provide different bandwidths.

As downlink transport channels carrying data from the network to the user equipment, there are provided a broadcast channel (BCH) carrying system information, a paging channel (PCH) carrying paging message, and a downlink shared channel (SCH) carrying user traffic or control messages. Traffic or control messages of a downlink multicast or broadcast service may be transmitted via the downlink SCH or an additional downlink multicast channel (MCH). Meanwhile, as uplink transport channels carrying data from the user equipment to the network, there are provided a random access channel (RACH) carrying an initial control message and an uplink shared channel (UL-SCH) carrying user traffic or control message. As logical channels located above the transport channels and mapped with the transport channels, there are provided a broadcast control channel (BCCH), a paging control channel (PCCH), a common control channel (CCCH), a multicast control channel (MCCH), and a multicast traffic channel (MTCH).

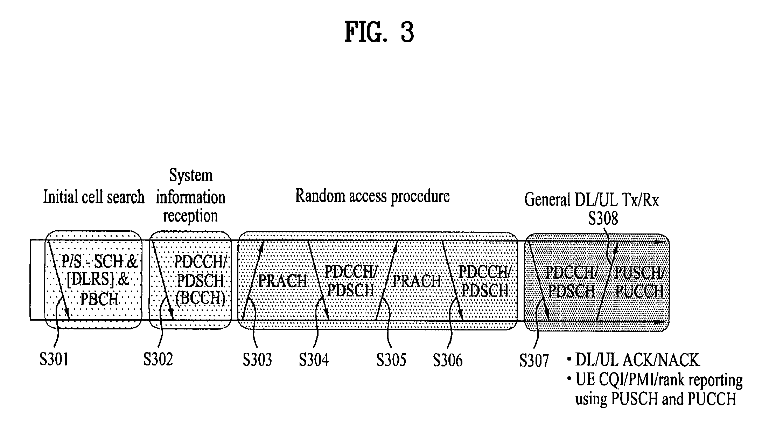

FIG. 3 is a diagram illustrating physical channels used in a 3GPP system and a general method for transmitting a signal using the physical channels.

The user equipment performs initial cell search such as synchronizing with the base station when it newly enters a cell or the power is turned on (S301). To this end, the user equipment synchronizes with the base station by receiving a primary synchronization channel (P-SCH) and a secondary synchronization channel (S-SCH) from the base station, and acquires information of cell ID, etc. Afterwards, the user equipment can acquire broadcast information within the cell by receiving a physical broadcast channel from the base station. Meanwhile, the user equipment can identify the status of a downlink channel by receiving a downlink reference signal (DL RS) in the initial cell search step.

The user equipment which has finished the initial cell search can acquire more detailed system information by receiving a physical downlink control channel (PDSCH) in accordance with a physical downlink control channel (PDCCH) and information carried in the PDCCH (S302).

Meanwhile, if the user equipment initially accesses the base station, or if there is no radio resource for signal transmission, the user equipment performs a random access procedure (RACH) for the base station (S303 to S306). To this end, the user equipment transmits a preamble of a specific sequence through a physical random access channel (PRACH) (S303 and S305), and receives a response message to the preamble through the PDCCH and a PDSCH corresponding to the PDCCH (S304 and S306). In case of a contention based RACH, a contention resolution procedure can be performed additionally.

The user equipment which has performed the aforementioned steps receives the PDCCH/PDSCH (S307) and transmits a physical uplink shared channel (PUSCH) and a physical uplink control channel (PUCCH) (S308), as a general procedure of transmitting uplink/downlink signals. In particular, the user equipment receives downlink control information (DCI) through the PDCCH. The DCI includes control information such as resource allocation information on the user equipment and has different formats depending on its purpose of use.

Meanwhile, the control information transmitted from the user equipment to the base station or received from the base station to the user equipment through the uplink includes downlink/uplink ACK/NACK signals, a channel quality indicator (CQI), a precoding matrix index (PMI), and a rank indicator (RI). In case of the 3GPP LTE system, the user equipment transmits the aforementioned control information such as CQI/PMI/RI through the PUSCH and/or the PUCCH.

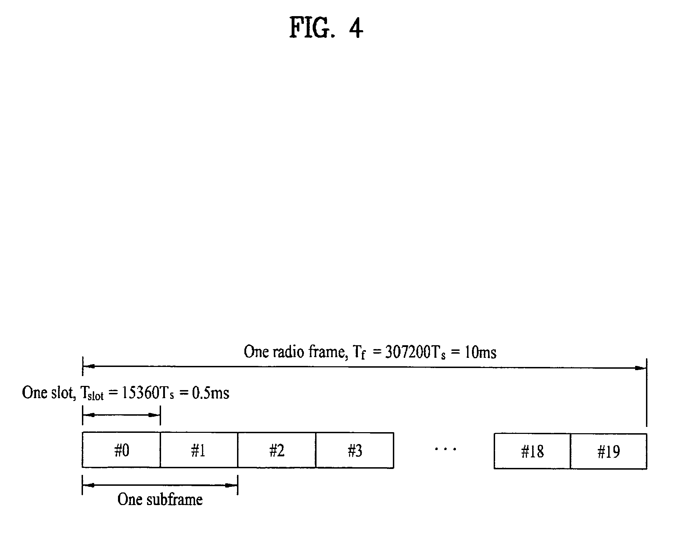

FIG. 4 is a diagram illustrating a structure of a radio frame used in an LTE system.

Referring to FIG. 4, the radio frame has a length of 10ms ($327200 \cdot T_s$) and includes 10 subframes of an equal size. Each sub frame has a length of 1ms and includes two slots. Each slot has a length of 0.5ms ($15360 \cdot T_s$). In this case, $T_s$ represents a sampling time, and is expressed by $T_s = 1/(15kHz \times 2048) = 3.2552 \times 10^{-8}$ (about 33ns). The slot includes a plurality of OFDM symbols in a time domain, and includes a plurality of resource blocks (RBs) in a frequency domain. In the LTE system, one resource block includes twelve(12) subcarriers $\times$ seven (or six) OFDM symbols. A transmission time interval (TTI), which is a transmission unit time of data, can be determined in a unit of one or more subframes. The aforementioned structure of the radio frame is only exemplary, and various modifications can be made in the number of subframes included in the radio frame or the number of slots included in the subframe, or the number of OFDM symbols included in the slot.

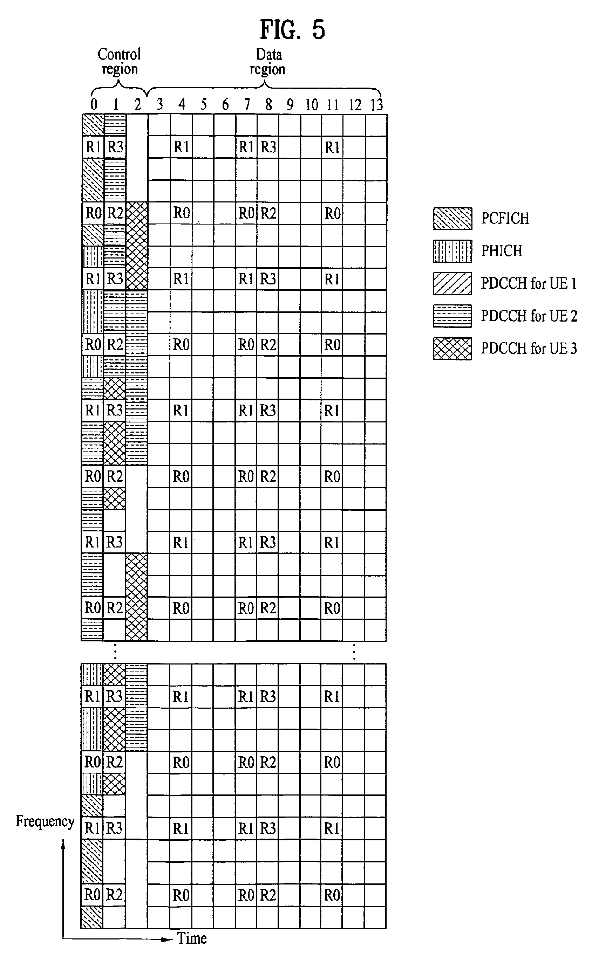

FIG. 5 is a diagram illustrating a control channel included in a control region of one subframe in a downlink radio frame.

Referring to FIG. 5, the subframe includes fourteen(14) OFDM symbols. First one to three OFDM symbols are used as the control region in accordance with establishment of subframe, and the other thirteen to eleven OFDM symbols are used as the data region. In FIG. 5, R1 to R4 represent reference signals (RS) or pilot signals of antennas 0 to 3. The RS is fixed by a given pattern within the subframe regardless of the control region and the data region. The control channel is allocated to a resource to which the RS is not allocated in the control region, and a traffic channel is also allocated to a resource to which the RS is not allocated in the data region. Examples of the control channel allocated to the control region include PCFICH(Physical Control Format Indicator CHannel), PHICH(Physical Hybrid-ARQ Indicator CHannel), and PDCCH(Physical Downlink Control CHannel).

The PCFICH notifies the user equipment of the number of OFDM symbols used in the PDCCH per subframe. The PCFICH is located in the first OFDM symbol and established prior to the PHICH and the PDCCH. The PCFICH includes four resource element groups (REG), each REG being distributed in the control region based on cell identity (cell ID). One REG includes four resource elements (REs). The RE represents a minimum physical resource defined by one subcarrier $\times$ one OFDM symbol. The PCFICH value indicates a value of 1 to 3 or a value of 2 to 4 depending on a bandwidth, and is modulated by Quadrature Phase Shift Keying (QPSK).

The PHICH is a physical hybrid-automatic repeat and request (HARQ) indicator channel and is used to transmit HARQ ACK/NACK signals for uplink transmission. Namely, the PHICH represents a channel where DL ACK/NACK information for UL HARQ is transmitted. The PHICH includes one REG, and is cell-specifically scrambled. The ACK/NACK signals are indicated by 1 bit, and are modulated by binary phase shift keying (BPSK). The modulated ACK/NACK are spread by a spreading factor (SF) = 2 or 4. A plurality of PHICHs can be mapped with the same resource and constitute a PHICH group. The number of PHICHs multiplexed in the PHICH group is determined by the number of spreading codes. The PHICH group is repeated three times to obtain diversity gain in the frequency region and/or the time region.

The PDCCH is allocated to first n number of OFDM symbols of the subframe, wherein n is an integer greater than 1 and is indicated by the PCIFCH. The PDCCH includes one or more CCEs. The PDCCH notifies each user equipment or user equipment group of information related to resource allocation of transport channels, i.e., a paging channel (PCH) and a downlink-shared channel (DL-SCH), uplink scheduling grant, HARQ information, etc. The PCH and the DL-SCH are transmitted through the PDSCH. Accordingly, the base station and the user equipment respectively transmit and receive data through the PDSCH except for specific control information or specific service data.

Information as to user equipment(s) (one user equipment or a plurality of user equipments) to which data of the PDSCH are transmitted, and information as to how the user equipment(s) receives and decodes1 PDSCH data are transmitted through the PDCCH. For example, it is assumed that a specific PDCCH is CRC masked with radio network temporary identity (RNTI) "A," and information of data transmitted using a radio resource (for example, frequency location) "B" and transmission format information (for example, transport block size, modulation mode, coding information, etc.) "C" is transmitted through a specific subframe. In this case, one or more user equipments located in a corresponding cell monitor the PDCCH using their RNTI information, and if there are one or more user equipments having RNTI "A", the user equipments receive the PDCCH, and receive the PDSCH indicated by "B" and "C" through information of the received PDCCH.

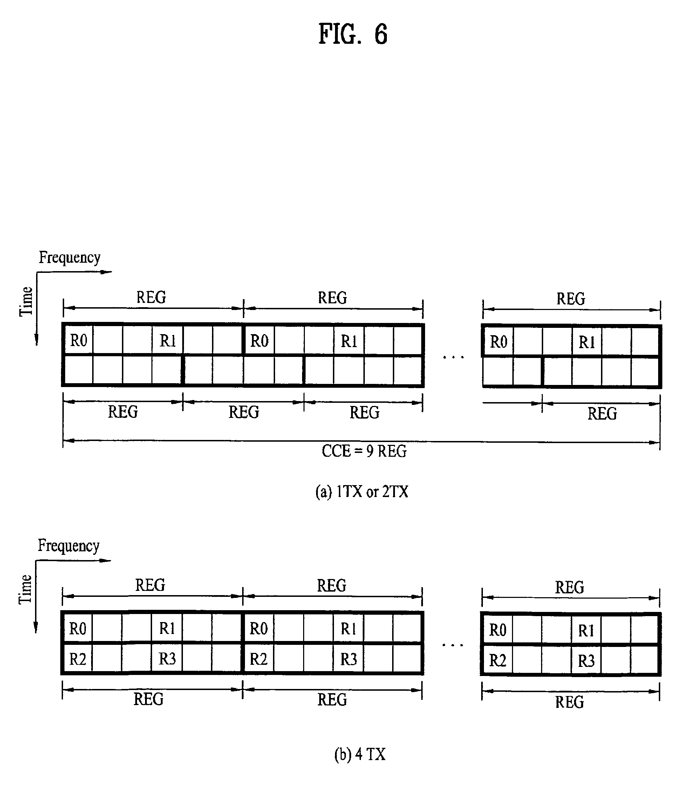

FIG. 6 is a diagram illustrating a resource unit used to configure a control channel. In particular, (a) of FIG. 6 illustrates that the number of transmitting antennas of the base station is 1 or 2, and (b) of FIG. 6 illustrates that the number of transmitting antennas of the base station is 4. In FIG. 6(a) and FIG. 6(b), different reference signal (RS) patterns are illustrated depending on the number of transmitting antennas but a method of establishing a resource unit related to a control channel is illustrated equally.

Referring to FIG. 6, a basic resource unit of the control channel is REG. The REG includes four neighboring resource elements (REs) excluding the reference signals. The REG is illustrated with a solid line. The PCFIC and the PHICH include four REGs and three REGs, respectively. The PDCCH is configured in a unit of (control channel element) CCE, one CCE including nine REGs.

The user equipment is established to identify M(L)(≥L) number of CCEs arranged continuously or arranged by a specific rule, whereby the user equipment can identify whether the PDCCH of L number of CCEs is transmitted thereto. A plurality of L values can be considered by the user equipment to receive the PDCCH. CCE sets to be identified by the user equipment to receive the PDCCH will be referred to as a search space. For example, the LTE system defines the search space as expressed in Table 1.

[Table 1]

| Search space $S_k^{(L)}$ | | | Number of PDCCH candidates $M^{(L)}$ | DCI formats |
|---|---|---|---|---|
| Type | Aggregation level $L$ | Size [in CCEs] | | |
| UE-specific | 1 | 6 | 6 | 0, 1, 1A, 1B, 2 |
| | 2 | 12 | 6 | |
| | 4 | 8 | 2 | |
| | 8 | 16 | 2 | |
| Common | 4 | 16 | 4 | 0, 1A, 1C, 3/3A |
| | 8 | 16 | 2 | |

In Table 1, CCE aggregation level L represents the number of CCEs constituting the PDCCH, $S_k^{(L)}$ represents a search space of the CCE aggregation level L, and $M^{(L)}$ represents the number of PDCCH candidates to be monitored in the search space.

The search space can be divided into a UE-specific search space that allows access to only a specific user equipment and a common search space that allows access to all user equipments within a cell. The user equipment monitors a common search space of L=4 and 8, and monitors a UE-specific search space of L=1, 2, 4 and 8. The common search space and the UE-specific search space can be overlapped with each other.

Furthermore, in the PDCCH search space given to a random user equipment for each CCE aggregation level value, the location of the first CCE (i.e., CCE having the smallest index) is varied per subframe depending on the user equipment. This will be referred to as a PDCCH search space hashing.

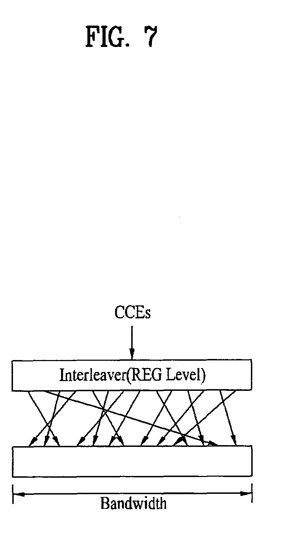

FIG. 7 is a diagram illustrating an example of CCEs distributed in a system band. Referring to FIG. 7, a plurality of logically continued CCEs are input to an interleaver. The interleaver performs interleaving of the plurality of CCEs in a unit of REG. Accordingly, the frequency/time resources constituting one CCE are physically distributed into all frequency/time regions within the control region of the subframe. As a result, although the control channel is configured in a unit of CCE, since interleaving is performed in a unit of REG, frequency diversity and interference randomization gain can be maximized.

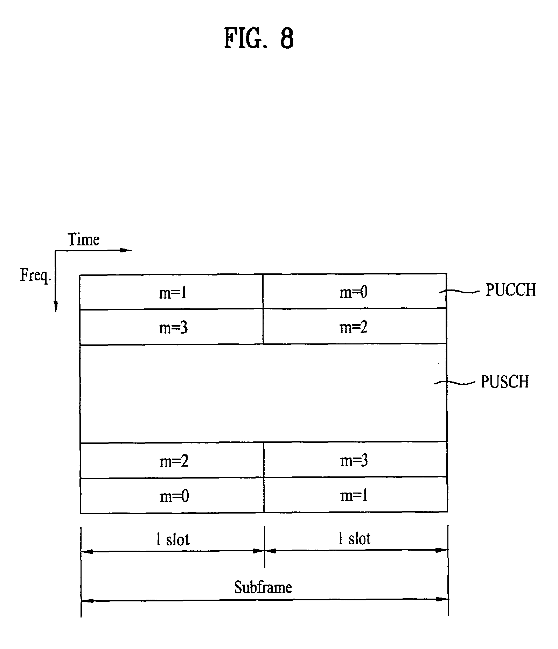

FIG. 8 is a diagram illustrating a structure of an uplink subframe used in an LTE system.

Referring to FIG. 8, the uplink subframe includes a region to which a physical uplink control channel (PUCCH) carrying control information is allocated, and a region to which a physical uplink shared channel (PUSCH) carrying user data is allocated. The center part of the subframe is allocated to the PUSCH, and both parts of the data region in the frequency region are allocated to the PUCCH. Examples of the control information transmitted on the PUCCH include ACK/NACK used for HARQ, a channel quality indicator (CQI) indicating the status of a downlink channel, a rank indicator (RI) for MIMO, and a scheduling request (SR) corresponding to uplink resource allocation request. The PUCCH for one user equipment uses one resource block that occupies different frequencies in each slot within the subframe. Namely, two resource blocks allocated to the PUCCH undergo frequency hopping in the boundary of the slots. Particularly, FIG. 7 exemplarily illustrates that PUCCH of m=0, PUCCH of m=1, PUCCH of m=2, and PUCCH of m=3 are allocated to the subframe.

Meanwhile, when the channel status between the base station and the user equipment is not good, a relay node (RN) is provided between the base station and the user equipment, whereby a radio channel having the more excellent channel status can be provided to the user equipment. Also, a relay node is provided in a cell edge zone having a poor channel status from the base station, whereby a data channel can be provided at higher speed, and a cell service zone can be extended. In this way, the technology of the relay node has been introduced to remove a radio wave shadow zone in a wireless communication system, and is widely used at present.

The technology of the relay node is being recently developed to more intelligent type than a function of a repeater that simply amplifies a signal and transmits the amplified signal. Moreover, the technology of the relay node reduces the extension cost for installation of base stations and the maintenance cost of a backhaul network in a next generation mobile communication system and at the same time is necessarily required to extend service coverage and improve a data processing rate. As the technology of the relay node is gradually developed, it is required that a new wireless communication system should support a relay node used in the related art wireless communication system.

In a 3rd generation partnership project long term evolution-advanced (3GPP LTE-A) system, as forwarding for link connection between the base station and the user equipment is introduced to the relay node, two types of links having different attributes are applied to each of uplink and downlink carrier frequency bands. A connection link portion established between links of the base station and the relay node will be defined as a backhaul link. Transmission of frequency division duplex (FDD) mode or time division duplex (TDD) mode based on downlink resources will be defined as a backhaul downlink, and transmission of frequency division duplex (FDD) mode or time division duplex (TDD) mode based on uplink resources will be defined as a backhaul uplink.

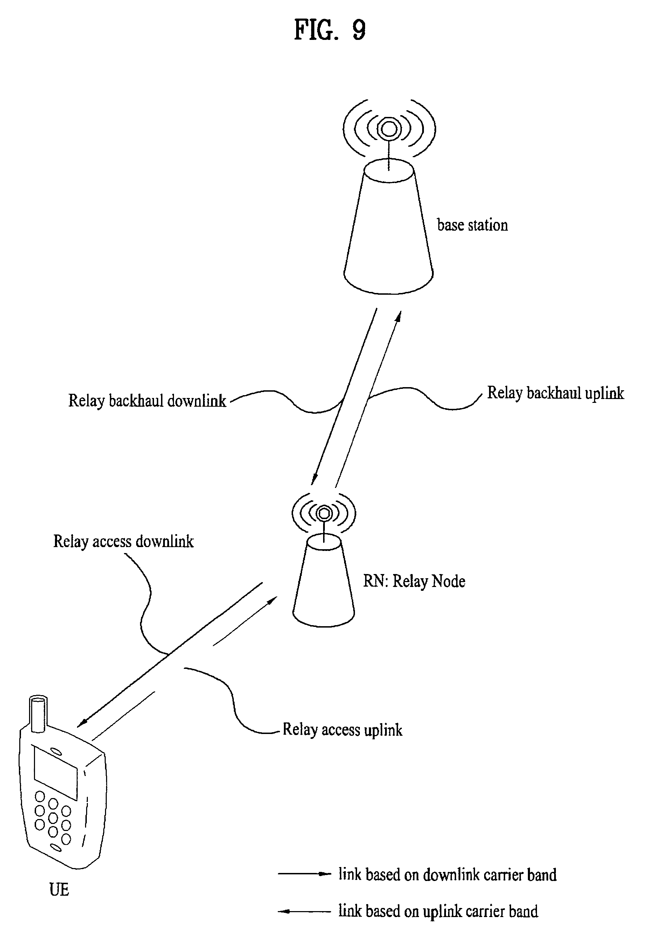

FIG. 9 is a diagram illustrating a configuration of a relay backhaul link and a relay access link in a wireless communication system.

Referring to FIG. 9, as the relay node is introduced for forwarding for link connection between the base station and the user equipment, two types of links having different attributes are applied to each of uplink and downlink carrier frequency bands. A connection link portion established between the base station and the relay node will be defined as a backhaul link. If transmission of the backhaul link is performed using resources of downlink frequency band (in case of FDD) or resources of downlink subframe (in case of TDD), the backhaul link can be expressed as a backhaul downlink. If transmission of the backhaul link is performed using resources of uplink frequency band (in case of FDD) or resources of uplink subframe (in case of TDD), the backhaul link can be expressed as a backhaul uplink.

On the other hand, a connection link portion between the relay node and a series of user equipments will be defined as a relay access link. If transmission of the relay access link is performed using resources of downlink frequency band (in case of FDD) or resources of downlink subframe (in case of TDD), the relay access link can be expressed as an access downlink. If transmission of the relay access link is performed using resources of uplink frequency band (in case of FDD) or resources of uplink subframe (in case of TDD), the relay access link can be expressed as an access uplink.

The relay node (RN) can receive information from the base station through the relay backhaul downlink, and can transmit information to the base station through the relay backhaul uplink. Also, the relay node can transmit information to the user equipment through the relay access downlink, and can receive information from the user equipment through the relay access uplink.

Meanwhile, in respect of band (or spectrum) of the relay node, if the backhaul link is operated in the same frequency band as that of the access link, the operation will be referred to as 'in-band' operation. If the backhaul link is operated in the frequency band different from that of the access link, the operation will be referred to as 'out-band' operation. In both in-band and out-band, a user equipment (hereinafter, referred to as 'legacy user equipment') operated in accordance with the existing LTE system (for example, release-8) should access a donor cell.

The relay node can be classified into a transparent relay node and a non-transparent relay node depending on whether the user equipment recognizes the relay node. The transparent relay node means that it fails to recognize whether the user equipment performs communication with the network through the relay node. The non-transparent relay node means that it recognizes whether the user equipment performs communication with the network through the relay node.

In respect of control of the relay node, the relay node can be classified into a relay node configured as a part of a donor cell and a relay node that controls a cell by itself.

Although the relay node configured as a part of a donor cell has relay node ID, it does not have its own cell identity. If at least a part of radio resource management (RRM) is controlled by a base station to which a donor cell belongs (even though the other parts of the RRM are located in the relay node), it will be referred to as a relay node configured as a part of the donor cell. Preferably, this relay node can support the legacy user equipment. For example, examples of this type relay node include smart repeaters, decode-and-forward relays, L2 (second layer) relay nodes, and type-2 relay node.

The relay node that controls a cell by itself controls one cell or several cells, and a unique physical layer cell identity is provided to each of cells controlled by the relay node. Also, the same RRM mechanism can be used for each of the cells. In view of the user equipment, there is no difference between access to a cell controlled by the relay node and access to a cell controlled by the base station. Preferably, the cell controlled by the relay node can support the legacy user equipment. For example, examples of this type relay node include a self-backhauling relay node, L3 (third layer) relay node, a type-1 relay node and a type-1a relay node.

The type-1 relay node is an in-band relay node and controls a plurality of cells, each of which is regarded as a separate cell differentiated from the donor cell in view of the user equipment. Also, the plurality of cells respectively have their physical cell ID (defined in LTE release-8), and the relay node can transmit its synchronization channel, reference signal, etc. In case of single-cell operation, the user equipment directly receives scheduling information and HARQ feedback from the relay node and transmits its control channel (scheduling request (SR), CQI, ACK/NACK, etc.) to the relay node. Also, in view of the legacy user equipments (operated in accordance with the LTE release-8 system), the type-1 relay node is regarded as a legacy base station (operated in accordance with the LTE release-8 system). Namely, the type-1 relay node has backward compatibility. Meanwhile, in view of the user equipments operated in accordance with the LTE-A system, the type-1 relay node is regarded as a base station different from the legacy base station, whereby throughput improvement can be provided.

The type-1a relay node has the same features as those of the aforementioned type-1 relay node in addition to out-band operation. The type-1a relay node can be configured in such a manner that its operation is less affected or not affected by the operation of L1 (first layer) operation.

The type-2 relay node is an in-band relay node, and does not have separate physical cell ID, whereby a new cell is not formed. The type-2 relay node is transparent with respect to the legacy user equipment, and the legacy user equipment fails to recognize the presence of the type-2 relay node. Although the type-2 relay node can transmit the PDSCH, it does not transmit CRS and PDCCH.

Meanwhile, in order that the relay node is operated in accordance with in-band, some resources in time-frequency domains should be reserved for the backhaul link, and can be established so as not to be used for the access link. This will be referred to as resource partitioning.

The general principle in resource partitioning of the relay node will be described as follows. The backhaul downlink and the access downlink can be multiplexed on one carrier frequency in accordance with the TDM mode (namely, only one of the backhaul downlink and the access downlink is enabled for a specific time). Similarly, the backhaul uplink and the access uplink can be multiplexed on one carrier frequency in accordance with the TDM mode (namely, only one of the backhaul uplink and the access uplink is enabled for a specific time).

According to backhaul link multiplexing in the FDD mode, backhaul downlink transmission is performed in a downlink frequency band, and backhaul uplink transmission is performed in an uplink frequency band. According to backhaul link multiplexing in the TDD mode, backhaul downlink transmission is performed in a downlink subframe of the base station and the relay node, and backhaul uplink transmission is performed in an uplink subframe of the base station and the relay node.

In case of the in-band relay node, if backhaul downlink reception from the base station and access downlink transmission to the user equipment are performed in a predetermined frequency band at the same time, a signal transmitted from a transmitter of the relay node can be received in a receiver of the relay node, whereby signal interference or RF jamming may occur in RF front-end of the relay node. Similarly, if access uplink reception from the user equipment and backhaul uplink transmission to the base station are performed in a predetermined frequency band at the same time, signal interference may occur in RF front-end of the relay node. Accordingly, it is difficult to perform simultaneous transmission and reception in one frequency band of the relay band unless sufficient separation (for example, a transmitting antenna and a receiving antenna are locally spaced apart from each other (for example, the transmitting antenna is installed on the ground and the receiving antenna is installed below the ground)) between the receiving signal and the transmitting signal is provided.

One solution for solving the problem of signal interference is that the relay node is operated so as not to transmit a signal to the user equipment when receiving a signal from a donor cell. In other words, a gap occurs in transmission from the relay node to the user equipment, and the user equipment (including legacy user equipment) can be configured so as not to expect any transmission from the relay node for the gap. The gap can be configured by a multicast broadcast single frequency network (MBSFN) subframe.

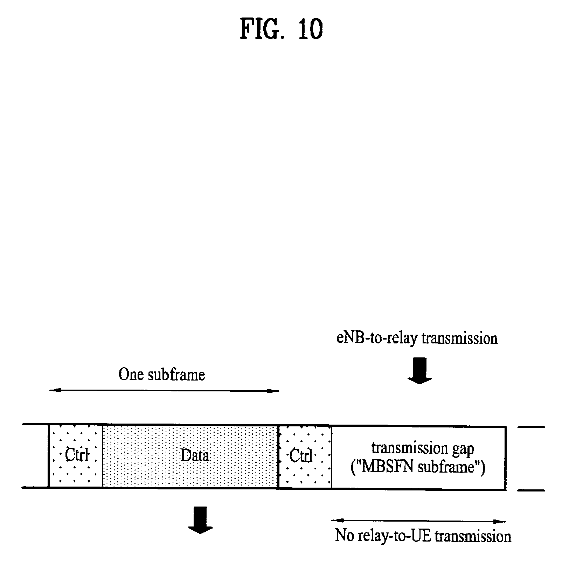

FIG. 10 is a diagram illustrating an example of resource partitioning of a relay node.

In FIG. 10, the first subframe is a general subframe, and a downlink (i.e., access downlink) control signal and data are transmitted from the relay node to the user equipment. The second subframe is an MBSFN subframe, and a control signal is transmitted from the relay node to the user equipment in a control region of a downlink subframe but no signal is transmitted from the relay node to the user equipment in other regions of the downlink subframe. Since the legacy user equipment expects transmission of a physical downlink control channel (PDCCH) from all downlink subframes (namely, since the relay node needs to support legacy user equipments in its zone to receive a PDCCH per subframe and perform a measurement function), for normal operation of the legacy user equipment, all downlink subframes need to transmit the PDCCH. Accordingly, even on a subframe (second subframe 1020) configured for downlink (i.e., backhaul downlink) transmission from the base station to the relay node, the relay node needs to perform access downlink transmission not backhaul downlink reception, for first N (N=1, 2 or 3) OFDM symbol intervals of the subframe. Since the PDCCH is transmitted from the relay node to the user equipment, backward compatibility for the legacy user equipment, which is served by the relay node, can be provided in the control region of the second subframe. The relay node can receive transmission from the base station in the other regions of the second subframe for the time when no transmission from the relay node to the user equipment is performed. Accordingly, this resource partitioning allows access downlink transmission and backhaul downlink reception not to be performed in the in-band relay node at the same time.

The second subframe which is the MBSFN subframe will be described in more detail. The control region of the second subframe may be regarded as a relay node non-hearing interval. The relay node non-hearing interval means that the relay node does not receive a backhaul downlink signal but transmits an access downlink signal. This interval can be set to 1, 2, or 3 OFDM length as described above. For the relay node non-hearing interval, the relay node performs access downlink transmission to the user equipment, and receives backhaul downlink from the base station in the other regions. At this time, since the relay node cannot perform transmission and reception in the same frequency band at the same time, it requires time to switch a transmission mode of the relay node to a reception mode of the relay node. Accordingly, a guard time (GT) is required for first some interval of a backhaul downlink receiving zone, so that the relay node performs transmission/reception mode switching. Similarly, even in the case that the relay node is operated to receive a backhaul downlink from the base station and transmit an access downlink to the user equipment, a guard time (GT) for reception/transmission mode switching of the relay node can be set. The length of the guard time may be given by a value of a time domain. For example, the length of the guard time may be given by k (k≥1) time sample (Ts) values, or one or more OFDM symbol lengths. Also, the guard time of the last portion of the subframe may not be defined, or may not be set either if backhaul downlink subframes of the relay node are set continuously or depending on timing alignment of predetermined subframes. The guard time can be defined in a frequency domain only set for backhaul downlink subframe transmission, to maintain backward compatibility (if the guard time is set for the access downlink interval, the legacy user equipment cannot be supported). For the backhaul downlink reception interval except for the guard time, the relay node can receive the PDCCH and the PDSCH from the base station. The PDCCH and the PDSCH may be referred to as a relay-PDCCH (R-PDCCH) and a relay-PDSCH (R-PDSCH) in view of physical channels dedicated for the relay node.

Unlike the PDCCH in the LTE system, the R-PDCCH may not exist in all bands. Accordingly, in order to minimize waste of resources by reducing blind decoding complexity, it is preferably required to configure R-PDCCH search space for minimum resources.

In this respect, the present invention suggests a search space for the R-PDCCH of which size is varied depending on a system bandwidth. In this case, the system bandwidth can be expressed by the number of resource blocks (RBs). In other words, the search space for the R-PDCCH according to the present invention means that its size is set to 25 RBs if the system bandwidth is 100 RBs and set to 12 RBs if the system bandwidth is 50 RBs.

Also, the number of resource blocks constituting the system bandwidth can be partitioned in a specific range, and the size of the resource block ground RBG which is a basic unit of resource allocation can be determined depending on the specific range. Accordingly, the search space for the R-PDCCH can be set depending on the size of the resource block group based on the system bandwidth. In particular, considering the size of the resource block group (RBG), N search spaces per RBG are set. Preferably, N is smaller than the RBG. The following Table 2 illustrates the size of the search space when N is 1.

[Table 2]

| System bandwidth (RB) | Resource allocation Unit size (RBG size) | R-PDCCH space (RB) |
|---|---|---|
| <=10 | 1 | <=10 |
| 11~26 | 2 | 6~23 |
| 27-63 | 3 | 9~21 |
| 64-110 | 4 | 16~28 |

Referring to Table 2, the value N may be 1, 2, 3, ..., or may be 0.5, 0.25,.... If the value N is 0.5, it means that one RB per 2 RBGs is set to the search space.

Meanwhile, it is preferable that the base station selects a resource allocation type (for example, resource allocation type 0, 1 or 2 in the LTE system) and performs resource allocation by considering the location and the number of the search spaces for the R-PDCCH.

In particular, it is preferable that the search spaces for the R-PDCCH set in accordance with the present invention are coordinated to avoid inter-cell interference. In other words, the search spaces for the R-PDCCH are preferably set at different locations to minimize inter-cell interference.

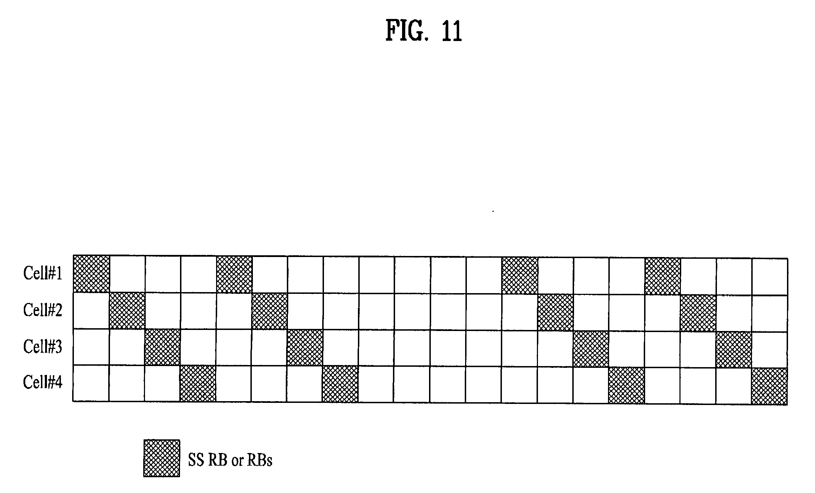

FIG. 11 is a diagram illustrating a method of setting a search space for R-PDCCH to reduce inter-cell interference in accordance with the embodiment of the present invention.

Referring to FIG. 11, it is designed that RBG of 4 RB size is used at the system bandwidth of 110 RB size. In this case, if a start location of the search space of Cell#1 is the first RB location of each RBG, a start location of the search space of Cell#2, which is adjacent to Cell#1 or requires coordination, is arranged at the other RB location except for the first RB location. Likewise, the same arrangement is applied to Cell#2 and Cell#3. In this way, as the start location of the search space is coordinated, inter-cell R-PDCCH contention, which may cause interference, can be minimized.

To this end, it is considered that the start location of the search space is allocated as an offset value. For example, the start location of the search space of Cell#1 is signaled if the offset value is 0, and the start location of the search space of Cell#2 is signaled if the offset value is 1. Although the RB unit is suggested in the present invention, integer multiples of RB or R-CCE may be used as a basic unit.

Meanwhile, although discontinuous RBs are set to the search space in RBG unit to reduce inter-cell interference, a method for resource allocation needs to be defined even in the case that continuous RBs are set to the search space. In other words, the method for resource allocation for the R-PDCCH can be applied to each system bandwidth in different modes.

Accordingly, in the present invention, it is preferable that maximum RBs, which can locally be allocated in accordance with each resource allocation mode, are set to the search space for the R-PDCCH, or RBs smaller than the maximum RBs are set to the search space for the R-PDCCH.

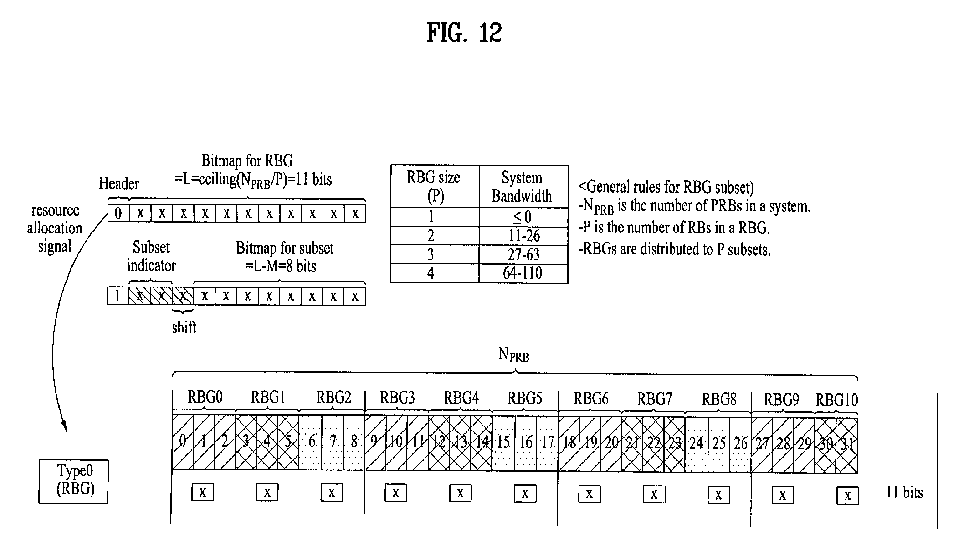

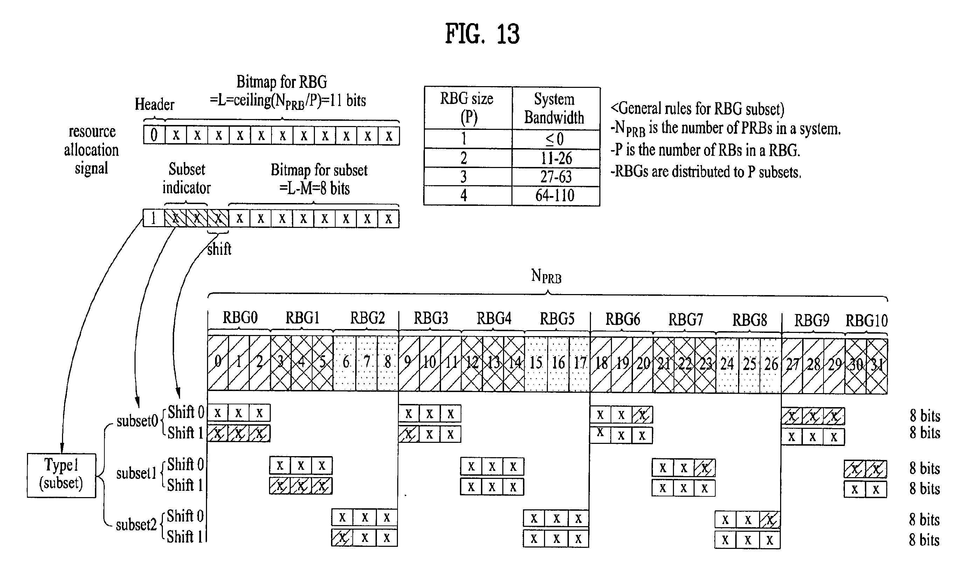

FIG. 12 and FIG. 13 are diagrams illustrating resource allocation information type 0 and resource allocation information type 1 in an LTE system. The present invention suggests a method of setting a search space for R-PDCCH using the resource allocation information.

A method of setting maximum RBs that can locally be allocated to a search space of R-PDCCH will be described with reference to Table 2, FIG. 12 and FIG. 13. It is assumed that the number of RBs constituting RBG is 3 and resource allocation information bits required for the RBs are 12 bits (including header information of 1 bit) at the system bandwidth of 32 RBs in Table 2.

In this case, 11 resource allocation bits except for header information of 1 bit are used for resource allocation in case of the resource allocation information type 0, whereas 8 resource allocation bits are used for resource allocation in case of the resource allocation information type 1. In other words, there is limitation in the size of resources that can be allocated at one time. Also, in case of the resource allocation information type 0, each resource allocation bit used for resource allocation indicates one RBG. In case of the resource allocation information type 1, each resource allocation bit used for resource allocation indicates one RB. In this respect, if the search space is configured using minimum 8 bits for resource allocation of the resource allocation information type 0 and the resource allocation information type 1, 8 RBGs of the resource allocation information type 0 and 8 RBs of the resource allocation information type 1 become the maximum values of the size of the search space for the R-PDCCH, which can locally be allocated. Preferably, the aforementioned resource allocation information is signaled through the upper layer.

Meanwhile, a hopping scheme can be used as a method for protecting a search space for R-PDCCH. Accordingly, it is preferable that sufficient resources for a search space for hopping are previously ensured.

At this time, different hopping patterns can be used per cell to distribute or reduce inter-cell interference. Although the hopping patterns are preferably orthogonal to one another, some of them may be repeated when considering the limited resources.

Preferably, hopping of the search space for the R-PDCCH is performed in a subframe unit, and the hopping patterns are defined in a unit of 20 slots, i.e., one radio frame. Hopping may be performed in a unit of slot or integer multiples of subframe in addition to a subframe unit. The period of the hopping patterns may be defined in a unit of integer multiples of radio frame.

According to the hopping scheme of the search space for the R-PDCCH, it is preferable that the relay node identifies a pattern of the search space for the R-PDCCH existing at a specific subframe and defines hopping patterns in association with subframe index to reduce inter-cell interference. Also, the hopping scheme of the search space for the R-PDCCH can be designed based on cell-ID based operation.

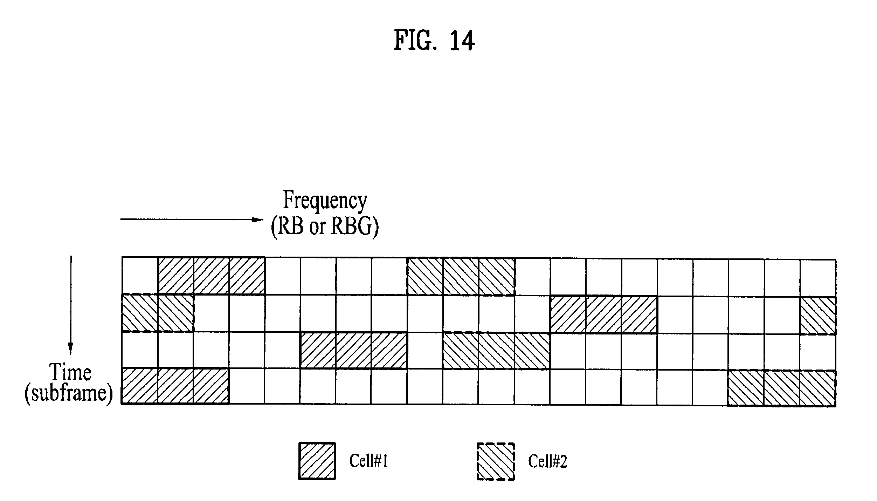

FIG. 14 is a diagram illustrating an example of a hopping scheme of a search space for R-PDCCH according to the embodiment of the present invention.

Referring to FIG. 14, if the search space for the R-PDCCH is configured in a localized mode, Cell#1 and Cell#2 vary the location of the search space for the R-PDCCH per subframe.

Although the present invention has been described based on the relay node, it may be applied to the method of configuring the search space for PDCCH in the user equipment and the apparatus thereof.

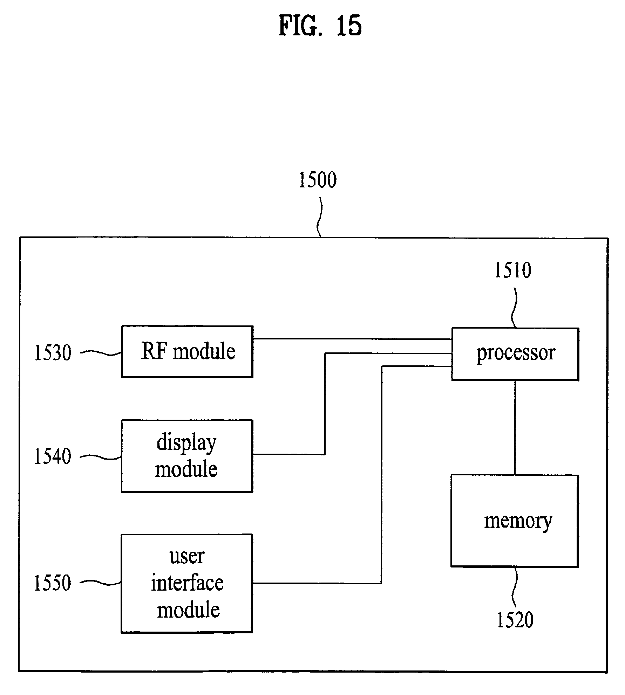

FIG. 15 is a block diagram illustrating a communication apparatus according to the embodiment of the present invention.

Referring to FIG. 15, the communication apparatus 1500 includes a processor 1510, a memory 1520, a radio frequency (RF) module 1530, a display module 1540, and a user interface module 1550.

The communication apparatus 1500 is illustrated for convenience of description, and some of its modules may be omitted. Also, the communication apparatus 1500 may further include necessary modules. Moreover, some modules may be divided into segmented modules. The processor 1510 is configured to perform the operation according to the embodiment of the present invention illustrated with reference to the drawings. For the detailed operation of the processor 1510, refer to the description illustrated in FIG. 1 to FIG. 14.

The memory 1520 is connected with the processor 1510 and stores an operating system, an application, a program code, and data therein. The RF module 1530 is connected with the processor 1510 and converts a baseband signal to a radio signal or vice versa. To this end, the RF module 1530 performs analog conversion, amplification, filtering and frequency uplink conversion, or their reverse processes. The display module 1540 is connected with the processor 1510 and displays various kinds of information. Examples of the display module 1540 include, but not limited to, a liquid crystal display (LCD), a light emitting diode (LED), and an organic light emitting diode (OLED). The user interface module 1550 is connected with the processor 1510, and can be configured by combination of well known user interfaces such as keypad and touch screen.

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

The embodiments of the present invention have been described based on the data transmission and reception between the relay node and the base station. A specific operation which has been described as being performed by the base station may be performed by an upper node of the base station as the case may be. In other words, it will be apparent that various operations performed for communication with the user equipment in the network which includes a plurality of network nodes along with the base station can be performed by the base station or network nodes other than the base station. The base station may be replaced with terms such as a fixed station, Node B, eNode B (eNB), and access point.

The embodiments according to the present invention can be implemented by various means, for example, hardware, firmware, software, or their combination. If the embodiment according to the present invention is implemented by hardware, the embodiment of the present invention can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

If the embodiment according to the present invention is implemented by firmware or software, the embodiment of the present invention can be implemented by a type of a module, a procedure, or a function, which performs functions or operations described as above. A software code may be stored in a memory unit and then may be driven by a processor. The memory unit may be located inside or outside the processor to transmit and receive data to and from the processor through various means which are well known.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

## INDUSTRIAL APPLICABILITY

Although the method of determining a size of a transport block transmitted from a base station to a relay node in a wireless communication system and the apparatus thereof have been described based on the 3GPP LTE system, the method and the apparatus can be applied to various MIMO wireless communication systems in addition to the 3GPP LTE system.

## Claims

1. A method of receiving a control signal in a relay node from a base station in a wireless communication system, the method comprising:

   receiving a downlink signal from the base station; and
   acquiring control information for the relay node by performing blind decoding for the downlink signal,
   wherein a size of a resource allocation basic unit for allocating the control information for the relay node is defined based on a system bandwidth,
   wherein a size of a search space for performing the blind decoding is set based on the system bandwidth and the size of the resource allocation basic unit, and
   wherein a location of the search space is defined by an offset value within the resource allocation basic unit.

2. The method of claim 1, wherein the search space is set as much as the predetermined number per the resource allocation basic unit.

3. The method of claim 1, wherein the location of the search space is varied per a subframe in accordance with patterns defined in a unit of a specific number of radio frames.

4. A method of receiving a control signal in a relay node from a base station in a wireless communication system, the method comprising:

   receiving a downlink signal from the base station; and
   acquiring control information for the relay node from a search space included in the downlink signal,
   wherein the search space is defined based on a resource allocation unit indicated by resource allocation bits included in resource allocation information received from a higher layer.

5. The method of claim 4, wherein the resource allocation unit indicated by the resource allocation bits is determined in accordance with a type of the resource allocation information.

6. The method of claim 4, wherein the resource allocation unit indicated by the resource allocation bits is resource block (RB) or resource block group (RBG).

7. A relay node in a wireless communication system, the relay node comprising:

   a receiving module receiving a downlink signal from a base station; and
   a processor acquiring control information for the relay node by performing blind decoding for the downlink signal,
   wherein a size of a resource allocation basic unit for allocating the control information for the relay node is defined based on a system bandwidth,
   wherein a size of a search space for performing the blind decoding is set based on the system bandwidth and the size of the resource allocation basic unit, and
   wherein a location of the search space is defined by an offset value within the resource allocation basic unit.

8. The relay node of claim 7, wherein the search space is set as much as the predetermined number per the resource allocation basic unit.

9. The relay node of claim 7, wherein the location of the search space is varied per a subframe in accordance with patterns defined in a unit of a specific number of radio frames.

10. A relay node in a wireless communication system, the relay node comprising:

a receiving module receiving a downlink signal from the base station; and
a processor acquiring control information for the relay node from a search space included in the downlink signal, wherein the search space is defined based on a resource allocation unit indicated by resource allocation bits included in resource allocation information received from a higher layer.

11. The relay node of claim 10, wherein the resource allocation unit indicated by the resource allocation bits is determined in accordance with a type of the resource allocation information.

12. The relay node of claim 10, wherein the resource allocation unit indicated by the resource allocation bits is resource block (RB) or resource block group (RBG).

# FIG. 1

E-UMTS

| Core network(CN) |
| --- |
| Access Gateway(AG) |
| eNode B — — — eNode B |

UE

# FIG. 2

(a) contol - plane protocol stack

(b) user - plane protocol stack

# FIG. 3

EP 2 560 299 A2

Initial cell search | System information reception | Random access procedure | General DL/UL Tx/Rx

P/S.-SCH &
[DLRS] &
PBCH

PDCCH/
PDSCH
(BCCH)

PRACH | PDCCH/
PDSCH | PRACH | PDCCH/
PDSCH

PDCCH/
PDSCH | PUSCH/
PUCCH

S301 | S302 | S303 | S304 | S305 | S306 | S307

S308

• DL/UL ACK/NACK
• UE CQI/PMI/rank reporting
  using PUSCH and PUCCH

# FIG. 4

One radio frame, $T_f = 307200T_s = 10ms$

One slot, $T_{slot} = 15360T_s = 0.5ms$

| #0 | #1 | #2 | #3 | · · · | #18 | #19 |

One subframe

# FIG. 5

# FIG. 6

(a) 1TX or 2TX

(b) 4 TX

# FIG. 7

CCEs

Interleaver(REG Level)

Bandwidth

# FIG. 8

# FIG. 9

base station

Relay backhaul downlink

Relay backhaul uplink

Relay access downlink

RN: Relay Node

Relay access uplink

UE

⟶ link based on downlink carrier band

⟵ link based on uplink carrier band

# FIG. 10

eNB-to-relay transmission

One subframe

| Ctrl | Data | Ctrl | transmission gap ("MBSFN subframe") |

No relay-to-UE transmission

# FIG. 11

# FIG. 12

Header

Bitmap for RBG
=L=ceiling($N_{PRB}$/P)=11 bits

resource allocation signal

| 0 | X | X | X | X | X | X | X | X | X | X | X |

Subset indicator

Bitmap for subset
=L-M=8 bits

| 1 | X | X | X | X | X | X | X | X | X | X | X |

shift

Type0 (RBG)

| RBG size (P) | System Bandwidth |
|---|---|
| 1 | ≤ 0 |
| 2 | 11-26 |
| 3 | 27-63 |
| 4 | 64-110 |

<General rules for RBG subset)
-$N_{PRB}$ is the number of PRBs in a system.
-P is the number of RBs in a RBG.
-RBGs are distributed to P subsets.

$N_{PRB}$

| RBG0 | RBG1 | RBG2 | RBG3 | RBG4 | RBG5 | RBG6 | RBG7 | RBG8 | RBG9 | RBG10 |

0 1 2 | 3 4 5 | 6 7 8 | 9 10 11 | 12 13 14 | 15 16 17 | 18 19 20 | 21 22 23 | 24 25 26 | 27 28 29 | 30 31

| X | X | X | X | X | X | X | X | X | X | X |

11 bits

EP 2 560 299 A2

# FIG. 13

resource allocation signal

Header

Bitmap for RBG
$=L=\text{ceiling}(N_{PRB}/P)=11$ bits

| 0 | X | X | X | X | X | X | X | X | X | X | X |

Subset indicator

Bitmap for subset
$=L-M=8$ bits

| 1 | X | X | X | X | X | X | X | X | X | X | X |

shift

| RBG size (P) | System Bandwidth |
|---|---|
| 1 | ≤ 0 |
| 2 | 11-26 |
| 3 | 27-63 |
| 4 | 64-110 |

<General rules for RBG subset)
-$N_{PRB}$ is the number of PRBs in a system.
-P is the number of RBs in a RBG.
-RBGs are distributed to P subsets.

$N_{PRB}$

| RBG0 | RBG1 | RBG2 | RBG3 | RBG4 | RBG5 | RBG6 | RBG7 | RBG8 | RBG9 | RBG10 |

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Type1 (subset)

subset0 { Shift 0 / Shift 1 }
subset1 { Shift 0 / Shift 1 }
subset2 { Shift 0 / Shift 1 }

8 bits (×6)

# FIG. 14

Frequency
(RB or RBG)

Time
(subframe)

Cell#1          Cell#2

# FIG. 15

1500

1510

1530 — RF module

1540 — display module

1550 — user interface module

processor

memory

1520